# EUROPÄISCHE PATENTSCHRIFT

(11) **EP 1 010 010 B1**
(45) Veröffentlichungstag und Bekanntmachung des Hinweises auf die Patenterteilung: **19.12.2001**
(21) Anmeldenummer: 98947506.6
(22) Anmeldetag: 03.09.1998
(51) Int. Cl.: G01P 1/00

(54) **VORRICHTUNG ZUM BEFESTIGEN EINES WINKELGEBERS**
DEVICE FOR MOUNTING AN ANGLE SENSOR
DISPOSITIF POUR FIXER UN DETECTEUR ANGULAIRE

(30) Priorität: 06.09.1997 DE 19739012
(43) Veröffentlichungstag der Anmeldung: 21.06.2000
(73) Patentinhaber: EUCHNER GmbH + Co., 70771 Leinfelden-Echterdingen (DE)
(72) Erfinder: PRIRSCH, Gerhard, D-70771 Leinfelden-Echterdingen (DE); STICHER, Siegfried, D-70567 Stuttgart (DE)
(74) Vertreter: Patentanwälte Bartels und Partner
(86) Internationale Anmeldenummer: EP9805577
(87) Internationale Veröffentlichungsnummer: WO9913340

(56) Entgegenhaltungen:
- FR-A- 2 593 436
- US-A- 4 477 121
- US-A- 4 645 372
- US-A- 5 550 467

## Beschreibung

Die Erfindung betrifft eine Vorrichtung zum Befestigen eines Winkelgebers an einem Gegenstand, beispielsweise an einer Werkzeugmaschine.

Die Befestigung von Winkelgeber ist aus dem Maschinenbau bekannt.
Unter dem Winkelgeber ist dabei ein Meßwertaufnehmer zu verstehen, der zur absolut-codierten oder relativ-codierten Erfassung eines Drehwinkels dient. Der Winkelgeber kann dabei beispielsweise entweder mit einer Antriebs- oder Hilfsachse gekoppelt sein oder direkt auf der Spindel einer Werkzeugmaschine sitzen. Um Meßungenäuigkeiten, Wellen- oder Lagerschäden zu vermeiden, sollte zwischen Antriebs- und Winkelgeberwelle stets eine flexible Kupplung montiert werden.

Üblicherweise werden die Winkelgeber auf den Gegenstand, beispielsweise auf die Werkzeugmaschine, aufgeschraubt und zwar entweder direkt mittels Gewindebohrungen in dem Winkelgeber oder unter Verwendung von Klemmstücken.

Die DE 36 13 135 A1 zeigt eine Befestigungsvorrichtung für den Aufnehmer einer induktiven Geschwindigkeitsmeßeinrichtung mit einer axial geschlitzten und den Aufnehmer umfassenden Hülse, die durch eine Schelle zusammendrückbar ist und dadurch den Aufnehmer festklemmt.

Die DE 37 17 180 A1 zeigt einen Elektromotor mit einem Lagerschild und einem in einem Gehäuse untergebrachten Tachogenerator, wobei das Gehäuse an dem Elektromotor mittels eines Rasthakens befestigt ist, der eine Wandung des Lagerschildes hintergreift.

Die DE 44 20 937 A1 zeigt eine Befestigungsvorrichtung, beispielsweise für einen Drehzahlsensor, mit einem elastisch verformbaren Element und einer daran angeordneten und einstückig damit verbundenen Sicke, die beim Verdrehen des Drehzahlsensors in eine Mulde am Drehzahlsensor in axialer Richtung einrastet.

Die US 4,645,372 zeigt eine Zugmaschinenkupplung, beispielsweise für einen Traktor, bei der eine in axialer Richtung entgegen der Wirkung einer Schraubenfeder verschiebbare Hülse eine Kugel in eine Ringnut einer Deichsel einschiebt und anschließend über die Kugel geschoben wird. Entsprechendes gilt für die in der US 4,477,121 gezeigte Rad-Schnellwechseleinrichtung.

Der Montageaufwand bei den bekannten Befestigungsarten für den Winkelgeber ist hoch und damit zeit- und kostenintensiv. Dies gilt insbesondere dann, wenn der Winkelgeber an schwer zugänglichen Stellen angebracht werden muß. Darüber hinaus fällt bei der bekannten Montagetechnik das Einkuppeln des Winkelgebers an die Maschinenwelle besonders schwer. Dies kann im ungünstigsten Fall, insbesondere bei absolut-codierten Winkelgebern, die Meßgenauigkeit nachteilig beeinflussen.

Der Erfindung liegt daher das Problem zugrunde, eine Vorrichtung zum Befestigen eines Winkelgebers an einem Gegenstand bereitzustellen, die eine besonders einfache und damit zeit- und kostengünstige Montage des Winkelgebers ermöglicht. Darüber hinaus soll die Zuverlässigkeit der Befestigungsvorrichtung und die Genauigkeit der Winkelmessung gewährleistet sein.

Das Problem wird durch die in dem unabhängigen Patentanspruch 1 offenbarte Befestigungsvorrichtung gelöst. Besondere Ausführungsarten der Erfindung sind in den Unteransprüchen offenbart.

Die erfindungsgemäße Befestigungsvorrichtung bietet den Vorteil einer einfachen Montage, da eine Befestigung des Winkelgebers mittels Schrauben oder Klemmpratzen entfällt und die Befestigung des Winkelgebers schraubenlos, zuverlässig und verdrehsicher erfolgt. Beim Einschieben des Winkelgebers in die Befestigungsvorrichtung wird das.Verriegelungselement entgegen der Rückstellkraft des elastischen Elements aus seiner Position gedrückt, in die es erst nach vollständigem Einschieben des Winkelgebers in die Befestigungsvorrichtung durch die Rückstellkraft des elastischen Elements und unter Einrasten in eine Aussparung in dem Winkelgeber wieder eingreift und dadurch den Winkelgeber auf dem Gegenstand befestigt. Dies läßt im günstigsten Fall eine Einhand-Montage des Winkelgebers an dem Gegenstand zu. Die Montage wird dadurch mit besonders geringem Zeit- und damit Kostenaufwand möglich. Darüber hinaus wird durch die Einfachheit des Befestigungsvorganges eine hohe Zuverlässigkeit der Montage erzielt.

Besonders vorteilhaft ist insbesondere, wenn das Verriegelungselement im wesentlichen oder zumindest teilweise in radialer Richtung in die Aussparung eingreift, weil dadurch auch bei kleinen, durch das elastisch verformbare Element aufzubringenden Kräften eine sichere und winkelgenaue Befestigung gewährleistet ist.

Bei der erfindungsgemäßen Lösung kann es sich bei dem Winkelgeber um einen absolut-codierten oder um einen relativ-codierten Winkelgeber handeln. Der Gegenstand, an dem die Vorrichtung befestigt wird, kann beispielsweise eine Werkzeugmaschine sein. Das elastische Element steht für ein elastisch verformbares Element bzw. für einen Kraftspeicher und kann beispielsweise durch eine Feder, ein elastisches Gummi- oder Kunststoff-Material oder auch durch ein pneumatisches, hydraulisches oder magnetisches Element gebildet sein. Im Falle einer Feder kann dabei jede geeignete Federform eingesetzt werden, beispielsweise eine Schraubenfeder, Tellerfeder oder Blattfeder. Bei dem Verschiebeelement kann es sich beispielsweise um einen einfachen Stift, ein Verschiebeplättchen oder auch um eine Hülse handeln. Bei dem Verriegelungselement kann es sich beispielsweise um eine Kugel, einen Stift, einen Bolzen oder auch um eine Klaue handeln.

Für die erfindungsgemäße Befestigungsvorrichtung ist es dabei unerheblich, ob diese auf dem Gegenstand oder auf dem Winkelgeber montiert ist, und entsprechend, ob das Verriegelungselement in eine Aussparung in dem Winkelgeber oder in eine Aussparung in dem Gegenstand eingreift. Letztlich müssen nur die Verriegelungselemente mit den Aussparungen erfindungsgemäß zusammenwirken, um eine zuverlässige Befestigung des Winkelgebers zu gewährleisten. Vorzugsweise wird die Befestigungsvorrichtung mittels konventioneller Befestigungsmittel an dem Gegenstand montiert, beispielsweise aufgeschraubt. In diesem Fall kann jeder Standard-Winkelgeber, der lediglich eine entsprechende Aussparung aufweisen muß, an die erfindungsgemäße Befestigungsvorrichtung "angeflanscht" werden. In der Regel können händelsübliche Winkelgeber ohne Veränderung der Bauform und ohne zusätzliche Bearbeitung eingesetzt werden.

Die Verschieberichtung des Verschiebelementes kann dabei sowohl in axialer Richtung, parallel zur Achse des Winkelgebers, als auch in umfänglicher Richtung vorgesehen sein, oder auch als eine Kombination und/oder Mischung einer axialen und umfänglichen Verschieberichtung bestehen.

Die besondere Ausführungsart der Erfindung gemäß dem Patentanspruch 2 hat den Vorteil, daß die gegen die Vorspannung durch das elastische Element gerichtete axiale Verschiebung der Hülse mit der Einschubrichtung des Winkelgebers übereinstimmt und somit die Montage des Winkelgebers sich besonders einfach gestaltet und unter günstigen Bedingungen mit einer Hand möglich ist.

Die besondere Ausführungsart der Erfindung gemäß dem Patentanspruch 3 hat den Vorteil, daß durch die Verwendung einer Feder als elastisches Element eine kostengünstige und gleichzeitig zuverlässige Realisierung des elastischen Elements möglich ist. Darüber hinaus sind vorteilhafterweise kleine und große Rückstellkräfte mit Standardfedern in nahezu jedem gewünschten Kraftbereich möglich.

Die besondere Ausführungsart der Erfindung gemäß dem Patentanspruch 4 hat den Vorteil, daß durch die Ausgestaltung der Aussparung als eine ringförmige Nut der Winkelgeber in jeder beliebigen umfänglichen Position auf dem Gegenstand befestigt werden kann. Dadurch wird sowohl die Befestigungstechnik als solches vereinfacht und darüber hinaus auch ein Einkuppeln der Winkelgeberwelle auf die Antriebswelle besonders einfach gemacht. Dadurch verringert sich der Befestigungsaufwand weiter und damit die Montagezeit und -kosten.

Die besondere Ausführungsart der Erfindung gemäß dem Patentanspruch 5 hat den Vorteil, daß durch die Verwendung einer Kugel als Verriegelungselement mit geringem finanziellen Aufwand eine zuverlässige und stabile Befestigung des Winkelgebers möglich ist. Weiterhin ist vorteilhaft, daß durch die Verwendung der abgeschrägten Flanke des Verschiebeelementes auch mit verhältnismäßig geringen Federkräften und damit geringen Lösekräften für das Lösen der Befestigung eine hohe Klemmkraft und damit eine besonders hohe Zuverlässigkeit der Befestigungsvorrichtung erzielt wird.

Die besondere Ausführungsart der Erfindung gemäß dem Patentanspruch 6 hat den Vorteil, daß durch die Verwendung von zylindrischen Körpern, beispielsweise Rundstiften, eine besonders hohe Befestigungswirkung erzielt wird. Darüber hinaus ist vorteilhaft, daß durch die entgegen der Einführrichtung des Winkelgebers geneigten sekantenförmigen umfänglichen Einschnitte die zylindrischen Körper beim Einführen des Winkelgebers entgegen der Stelikraft des elastischen Elementes aus ihrer Position geschoben werden und erst wieder in die Aussparung des Winkelgebers einrasten, wenn dieser sich in der vollständigen Einschiebeposition befindet. Dadurch ist eine echte Einhand-Befestigung des Winkelgebers an dem Gegenstand möglich.

Ein Lösen der Befestigüngsverbindung erfolgt unabhängig von der Art der Verriegelungselemente jeweils durch Verschieben des Verschiebeelementes entgegen der Stellkraft des elastischen Elementes und damit durch Freigabe der Verriegelungselemente.

Die besondere Ausführungsart der Erfindung gemäß dem Patentanspruch 7 hat den Vorteil, daß beispielsweise durch das Anbringen einer Ausnehmung und das Vorsehen eines entsprechenden Vorsprunges der Winkelgeber in bezug auf die Vorrichtung in umfänglicher Richtung definiert und gegen Verdrehung gesichert befestigt wird, wobei die Positionierungsmittel in einem Querschnitt parallel zur Achse des Winkelgebers beispielsweise stiftförmig, halbrundförmig, dreieckig oder trapezförmig ausgebildet sein können. Die Ausgestaltung des Vorsprungs bzw. der Ausnehmung kann dabei vorteilhaft so geschehen, daß sich beim Einschieben des Winkelgebers sowohl eine Zentrierung des Winkelgebers in bezug auf die Befestigungsvorrichtung und damit in bezug auf den Gegenstand als auch eine Zentrierung des Vorsprungs in bezug.auf die Ausnehmung ergibt. Durch das Vorsehen mehrerer Ausnehmungen in Verbindung mit einem oder mehreren Vorsprüngen der Winkelgeber in bezug auf die Vorrichtung in mehreren vordefinierten Positionen exakt befestigt werden kann. Neben der exakten Ausrichtung des Winkelgebers in bezug auf die Vorrichtung und damit in bezug auf den Gegenstand bietet diese Ausführungsart der Erfindung noch den Vorteil, daß die elektrischen oder sonstigen Ableitungen des Winkelgebers an einer bestimmten Position und/oder in einer bestimmten Richtung von dem Winkelgeber abgeführt werden. Dies ist insbesondere bei schwer zugänglichen Stellen für die Anbringung des Winkelgebers von Vorteil. Darüber hinaus ist die Bereitstellung von mehreren in umfänglicher Richtung vordefinierten Positionen vorteilhaft, da sie ein Einkuppeln der Winkelgeberwelle auf die Antriebswelle erleichtert.

Die besondere Ausführungsart der Erfindung gemäß dem Patentanspruch 8 hat den Vorteil, daß derartige Positionierungsmittel besonders einfach und kostengünstig bereitgestellt werden können. Die Nuten in der Vorrichtung können beispielsweise ausgehend von der Achse des Winkelgebers sternförmig nach außen verlaufen.

Die besondere Ausführungsart der Erfindung gemäß dem Patentanspruch 9 hat den Vorteil, daß durch die Verwendung mehrerer Verriegelungselemente, die umfänglich auf der Befestigungsvorrichtung verteilt sind, die Genauigkeit und die Zuverlässigkeit der Befestigungsvorrichtung weiter erhöht wird.

Zu der Lehre der Erfindung gehört auch ein Gegenstand beziehungsweise eine Maschine gemäß dem Patentanspruch 10. Diese Maschine kann beispielsweise eine Werkzeugmaschine, eine Webmaschine, eine Strick- oder Rundstrickmaschine, eine Papierbearbeitungsmaschine, eine Walzmaschine, eine Druck- oder Rotationsdruckmaschine, ein Plotter, ein ein - oder mehrachsiger Roboter oder auch allgemein eine Maschine mit einem ein- oder mehrachsigen Antrieb sein. Gerade bei einer Maschine mit mindestens einer Achse als einem der typischen Anwendungsgebiete von Winkelgebern vermag die erfindungsgemäße Befestigungsvorrichtung für Winkelgeber ihre Vorteile zur Geltung bringen, da häufig gerade bei diesen Maschinen die Anbringung von Winkelgebern an schwer zugänglichen Stellen erforderlich ist und damit. eine einfachere Befestigungstechnik den Gebrauchswert der Maschine deutlich erhöht.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im einzelnen beschrieben sind.

Ein Weg zum Ausführen der beanspruchten Erfindung ist nachfolgend anhand der Zeichnungen im einzelnen erläutert.
- Fig. 1: zeigt einen Querschnitt einer erfindungsgemäßen Befestigungsvorrichtung mit befestigtem Winkelgeber.
- Fig. 2: zeigt eine Draufsicht auf die erfindungsgemäße Befestigungsvorrichtung der Fig. 1.
- Fig. 3: zeigt einen Querschnitt durch eine alternative Ausführungsform der erfindungsgemäßen Befestigungsvorrichtung.
- Fig. 4: zeigt eine Draufsicht auf die schematisch dargestellte Vorrichtung der Fig. 3.
- Fig. 5: zeigt eine Seitenansicht der schematisch dargestellten Vorrichtung der Fig. 3.
- Fig. 6: zeigt den Kupplungsbereich des befestigten Winkelgebers.

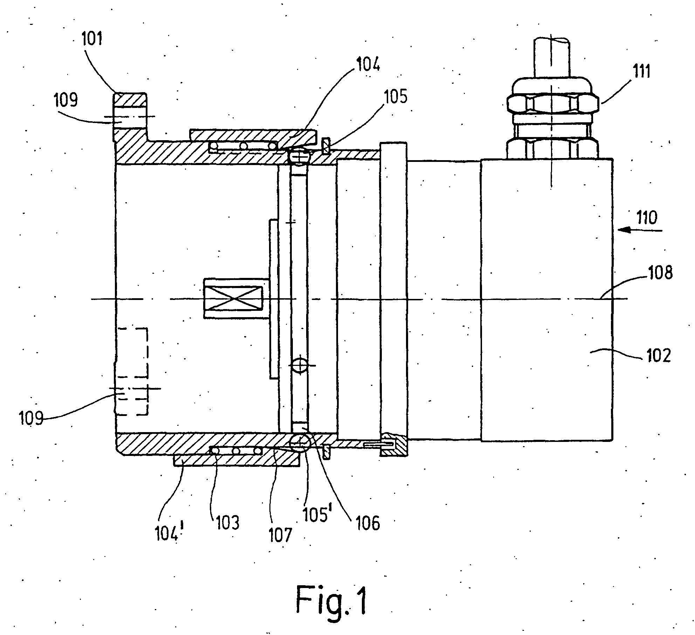

Die Fig. 1 zeigt einen Querschnitt durch eine erfindungsgemäße Befestigungsvorrichtung 101 mit einem daran befestigten Winkelgeber 102.

Die Vorrichtung 101 weist als elastisches Element eine Schraubenfeder.103 auf. Weiterhin weist die Vorrichtung 101 als Verschiebeelement eine in axialer Richtung verschiebbare und die Vorrichtung 101 in axialer Richtung abschnittsweise umschließende Hülse 104 auf. Weiterhin weist die Vorrichtung 101 als Verriegelungselement eine Kugel 105 auf, die am Umfang in einer Bohrung positioniert ist. Die Bohrung in der Wand der Vorrichtung 101 ist dabei in Richtung auf die Mittelachse der Vorrichtung 101 so verengt, daß die Kugel 105 nicht in Richtung der Mittelachse durch die Bohrung durchfällt. In Richtung der umschließenden Hülse 104 wird die Kugel 105 von der Flanke 107 gehalten. Die Kugel 105 wird durch die Rückstellkraft der Schraubenfeder 103 und mittels der Flanke 107 des Verschiebeelementes 104 in die Ringnut 106 des Winkelgebers 102 in radialer Richtung eingedrückt.

Die Flanke 107 des Verschiebeelementes 104 bildet mit der axialen Richtung 108 des Winkelgebers 102 einen spitzen Winkel oder, in anderen Worten, die Flanke 107 des Verschiebeelementes 104 weist einen Konus auf, wobei durch die Rückstellkraft der Schraubenfeder 103 und die damit verursachte axiale Bewegung des Verschiebeelementes 104 die Kugel 105 in radialer Richtung in die Ringnut 106 des Winkelgebers 102 eingedrückt wird und damit den Winkelgeber in der Befestigungsvorrichtung 101 befestigt. Die Befestigungsvorrichtung 101 weist darüber hinaus Bohrungen 109 auf, mittels derer unter Verwendung von Schrauben die Befestigungsvorrichtung 101 auf einem Gegenstand befestigt werden kann, beispielsweise auf einer. Werkzeugmaschine.

Die Einschubrichtung des Winkelgebers 102 ist durch den Pfeil 110 verdeutlicht. Zum Einschieben wird das Verschiebeelement 104 manuell in Richtung des Pfeiles 110 zurückgeschoben und damit die Kugel in radialer Richtung freigegeben. Der Winkelgeber 102 kann daraufhin in die Befestigungsvorrichtung 101 eingeschoben werden, wobei durch leichtes Verdrehen ein Einkuppeln einer (nicht dargestellten) Kupplung zwischen dem Winkelgeber und der Antriebswelle erreicht werden kann. Anschließend wird der Winkelgeber 102 bis zum Anschlag in die Befestigungsvorrichtung 101 eingeschoben. Daraufhin wird das Verschiebeelement 104 freigegeben und dieses bewegt sich aufgrund der Rückstellkraft der Schraubenfeder 103 in Richtung entgegen des Pfeiles 110. Die schräge Flanke 107 setzt dabei die axiale Bewegung des Verschiebeelementes 104 in eine radiale Klemm- bzw. Befestigungsbewegung der Kugel 105 um. Die von der Schraubenfeder 103 aufgebrachte Federkraft bestimmt damit letztlich die Klemm- bzw. Befestigungskraft. Darüber hinaus ist in der Fig. 1 der seitlich abgehende elektrische Anschluß 111 des Winkelgebers 102 dargestellt.

Die Anordnung aus Verschiebeelement 104' und Verriegelungselement bzw. Kugel 105' ist in der unteren Hälfte der Fig. 1 derart dargestellt, daß
das Verriegelungselement bzw. die Hülse 104' entgegen der Rückstellkraft der Feder 103 zurückgeschoben ist in Richtung 110 und
das Verriegelungselement bzw. die Kugel 105' von der Flanke 107 soweit freigegeben wird, daß sie die Ringnut 106 des Winkelgebers 102 freigibt. In der oberen Hälfte der Fig. 1 ist die Position der Hülse 104 derart, daß
die Hülse 104 infolge der Rückstellkraft der Feder 103 mit seiner Flanke derart gegen die Kugel 105 drückt, daß die Kugel 105 in die Ringnut 106 des Winkelgebers eingreift und den Winkelgeber 102 dadurch befestigt.

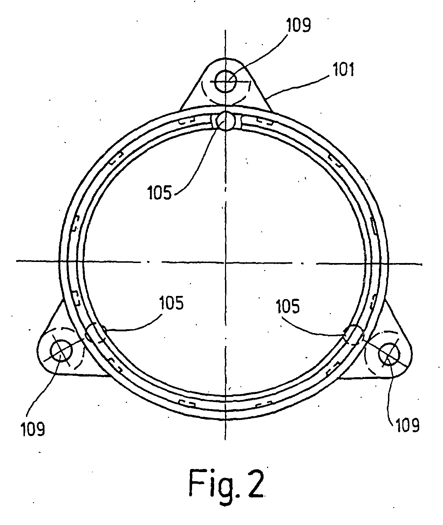

Die Fig. 2 zeigt eine Draufsicht auf die erfindungsgemäße Befestigungsvorrichtung 101. Die Befestigungslöcher 109 der Befestigungsvorrichtung 101 sind dabei umfangseitig entsprechend den Eckpunkten eines gleichseitigen Dreiecks verteilt. Diese Befestigungslöcher 109 dienen lediglich der Befestigung der Befestigungsvorrichtung 101 an dem Gegenstand. Die als Verriegelungselement dienenden Kugeln 105 sind umfangseitig ebenfalls so positioniert, wie es den Eckpunkten eines gleichseitigen Dreiecks entspricht. Selbstverständlich können so viele Kugeln vorgesehen sein, wie es der jeweilige Anwendungsfall erfordert.

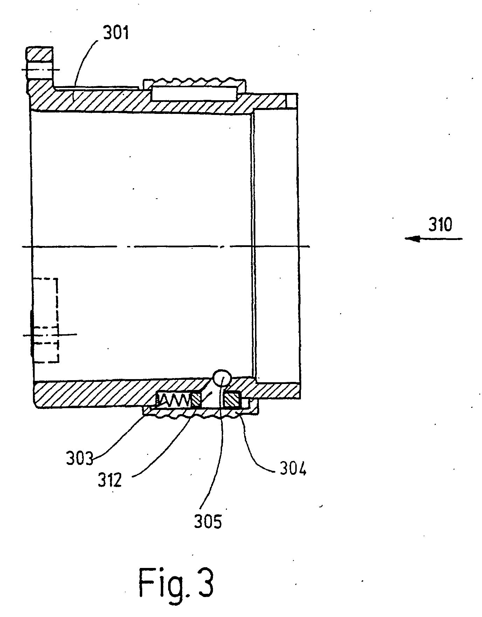

Die Fig. 3 zeigt einen Querschnitt durch eine weitere erfindungsgemäße Befestigungsvorrichtung 301. Der zu befestigende Winkelgeber ist in der Fig. 3 nicht dargestellt. Als elastisches Element dient in dem gezeigten Beispiel eine Schraubenfeder 303. Dabei kann entweder nur eine Feder vorgesehen sein oder mehrere, beispielsweise drei oder mehr über den Umfang verteilte Federn vorgesehen sein. Letztlich bestimmt die erforderliche Verriegelungskraft die Zahl, Stärke und Anordnung der Federn. Als Verschiebeelement dient wiederum eine Hülse 304, die in axialer Richtung 310 verschiebbar ist und welche die Vorrichtung 301 in axialer Richtung 310 abschnittsweise umschließt. Als Verriegelungselement dient in der dargestellten Ausführungsform ein zylindrischer Körper, nämlich ein Rundstift 305. Die Vorrichtung 301 weist an ihrem Umfang insgesamt drei sekantenförmige Einschnitte 312 auf, die in bezug auf die axiale Richtung 310 des Winkelgebers und in Richtung auf die Achse des Winkelgebers hin geneigt sind. Der Rundstift 305 ist in dem sekantenförmigen Einschnitt 312 so positioniert, daß er durch eine vorzugsweise im wesentlichen auf seine Enden wirkende Rückstellkraft der Feder 303 in die Aussparung in dem Winkelgeber eingedrückt wird und dadurch der Winkelgeber befestigt wird.

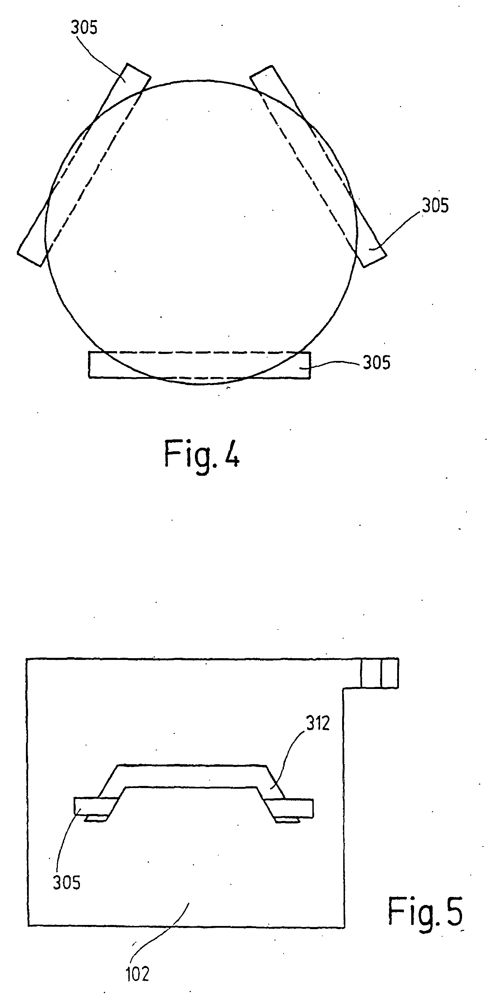

Die Fig. 4 zeigt eine Draufsicht auf die schematisch dargestellte Vorrichtung der Fig. 3. Insbesondere zeigt die Fig. 4 die Anordnung der verriegelnden Rundstifte 305 entsprechend den Positionen der Eckpunkte eines gleichseitigen Dreiecks.

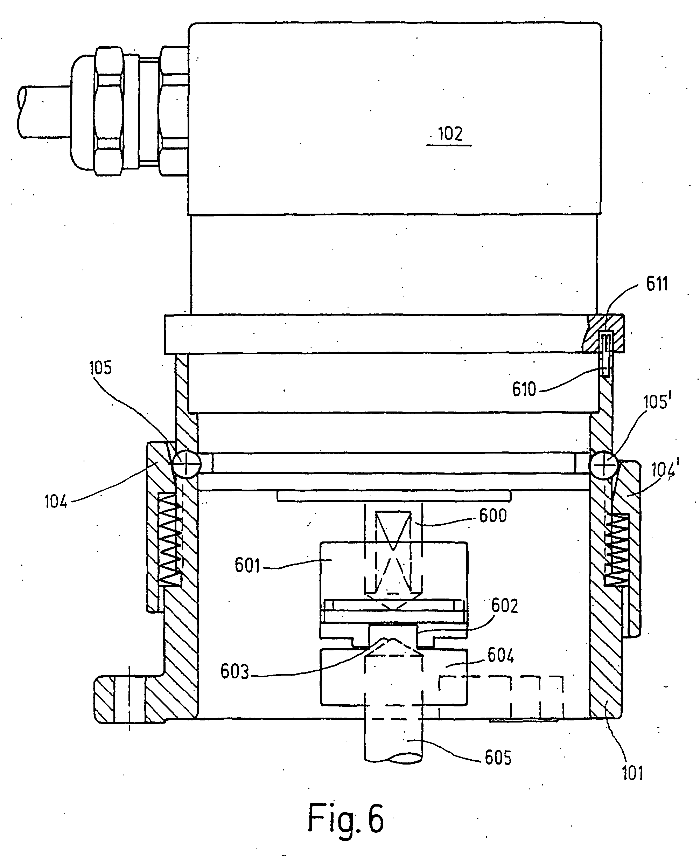

Die Fig. 5 zeigt eine Seitenansicht der schematisch dargestellten Vorrichtung der Fig. 3. Insbesondere zeigt die Fig. 5 die Position und Ausrichtung des Einschnittes 312, sowie die Lage des verriegelnden Rundstiftes 305.

Die Fig. 6 zeigt den Kupplungsbereich des befestigten Winkelgebers.
Das winkelgeberseitige Kupplungsstück 601, das auf der Welle 600 des Winkelgebers 102 sitzt, weist dabei eine Nut 602 auf, in die eine Feder 603 des Kupplungsstückes 604 der Welle 605, an welche der Winkelgeber gekoppelt wird, eingreift. Darüber hinaus zeigt die. Fig. 6, wie ein Vorsprung der Befestigungsvorrichtung in Form eines federnd gelagerten oder federnden Stiftes 610 in eine entsprechende Ausnehmung 611 des Winkelgebers eingreift, um den Winkelgeber in bezug auf die Vorrichtung in umfänglicher Richtung definiert und spielfrei gegen Verdrehen zu befestigen. Der Stift 610 ist wie bei einem elektrischen Kontaktstift einfach oder kreuzweise geschlitzt und im Durchmesser etwas größer als die Bohrung oder eine Nut 611 im Wink elgeber. Alternativ dazu ist auch ein gefederter und etwas konischer Indexstift möglich. Die Kupplung 601 steht gegenüber der Stift/ Ausnehmung-Anordnung etwas weiter vor, so daß die Nut 602 und Feder 603 bereits in Eingriff sind, wenn der Stift 610 in die Ausnehmung 611 eingeführt wird. Dadurch wird ein sicheres Einkuppeln vor der endgültigen umfänglichen Ausrichtung des Winkelgebers 102 gewährleistet. Vorzugsweise weist die Kupplung 601, 604 einen Fangbereich auf, der das Einkuppeln bei der Befestigung des Winkelgebers 102 vereinfacht und gleichzeitig eine spielfreie Kupplungsverbindung gewährleistet.

In der linken Hälfte der Fig. 6 ist die Hülse 104 in einer Position, daß sie die Kugel 105 aufgrund der Rückstellkraft der Feder in eine Position in die Nut des Winkelgebers 102 eindrückt und den Winkelgeber dadurch befestigt. Demgegenüber ist auf der rechten Hälfte der Fig. 6 die Hülse 104' in einer Position dargestellt, daß sie entgegen der Rückstellkraft der Feder die Kugel 105' so weit freigibt, daß die Kugel 105' nicht in die Nut des Winkelgebers 102 eingreift und diesen somit freigibt. In der linken Hälfte der Fig. 6 ist somit die Verriegelungsposition dargestellt, wogegen in der rechten Hälfte der Fig. 6 die Löseposition der Hülse 104' bzw. der Kugel 105' dargestellt ist.

## Patentansprüche

1. Vorrichtung (101) zum Befestigen eines Winkelgebers (102) an einem Gegenstand mit mindestens einem elastischen Element (103), mindestens einem Verriegelungselement (105) und mindestens einem Verschiebeelement (104), das durch das elastische Element (103) vorgespannt ist und durch die Vorspannung mit dem Verriegelungselement (105) derart zusammenwirkt, daß das Verriegelungselement (105) befestigend in eine Aussparung (106) eingreift, wobei das Verschiebeelement (104) in seiner befestigenden Stellung durch das elastische Element (103) in Anlage an dem Verriegelungselement (105) haltbar ist, und dadurch das Verriegelungselement (105) in die Aussparung eindrückbar ist.

2. Vorrichtung nach Anspruch 1, **dadurch gekennzeichnet, daß** das Verschiebeelement (104) in axialer Richtung (110) verschiebbar ist und insbesondere daß das Verschiebeelement (104) eine Hülse ist, welche die Vorrichtung (101) in axialer Richtung (110) mindestens abschnittsweise umschließt.

3. Vorrichtung nach Anspruch 1 oder 2, **dadurch gekennzeichnet, daß** das elastische Element (103) eine Feder ist, insbesondere eine Schraubenfeder.

4. Vorrichtung nach einem der Ansprüche 1 bis 3, **dadurch gekennzeichnet, daß** die Aussparung (106) eine ringförmige Nut ist.

5. Vorrichtung nach einem der Ansprüche 1 bis 4, **dadurch gekennzeichnet, daß** das Verriegelungselement (105) eine umfänglich in einer entsprechenden Bohrung der Vorrichtung (101) positionierte Kugel ist, die durch eine Rückstellkraft des elastischen Elements (103) und mittels einer Flanke (107) des Verschiebeelementes (104), die mit der axialen Richtung (110) des Winkelgebers (102) einen spitzen Winkel bildet, in die Aussparung (106) in dem Winkelgeber (102) in radialer Richtung eindrückbar ist.

6. Vorrichtung nach einem der Ansprüche 1 bis 4, **dadurch gekennzeichnet, daß** die Vorrichtung (101) an ihrem Umfang mindestens einen auf
die Achse (108) des Winkelgebers (102) gerichteten sekantenförmigen Einschnitt (312) derart aufweist, daß die Richtung des Einschnitts (312) mit der Achse (108) einen spitzen Winkel einschließt, und daß
das Verriegelungselement ein zylindrischer Körper (305) ist, der in dem sekantenförmigen Einschnitt (312) positioniert ist und durch eine im wesentlichen auf seine Enden einwirkende Rückstellkraft des elastischen Elementes (303) in die Aussparung in dem Winkelgeber (102) eindrückbar ist.

7. Vorrichtung nach einem der Ansprüche 1 bis 6, **dadurch gekennzeichnet, daß** der Winkelgeber (102) und die Vorrichtung (101) mindestens jeweils ein vorzugsweise am Umfang angeordnetes und insbesondere axial ausgerichtetes Positionierungsmittel (610, 611) aufweisen, die einander zugeordnet sind und beim Befestigen des Winkelgebers (102) mindestens partiell formschlüssig ineinandergreifen, um den Winkelgeber (102) in bezug auf die Vorrichtung (101) in umfänglicher Richtung definiert zu befestigen.

8. Vorrichtung nach Anspruch 7, **dadurch gekennzeichnet, daß** die Positionierungsmittel durch mindestens einen Schraubenkopf am Winkelgeber (102) und durch mindestens eine, in Bezug auf die Achse (108) des Winkelgebers (102) radial verlaufende Nut in der Vorrichtung (101) gebildet sind.

9. Vorrichtung nach einem der Ansprüche 1 bis 8, **dadurch gekennzeichnet, daß** mehrere Verriegelungselemente (105, 305) umfänglich verteilt angeordnet sind, insbesondere daß drei Verriegelungselemente (105, 305) an den, den Eckpunkten eines gleichseitigen Dreiecks entgprecheriden Positionen am Umfang der Vorrichtung (101, 301) angeordnet sind.

10. Gegenstand mit mindestens einer Achse, insbesondere eine Bearbeitungsmaschine oder eine Produktionsmaschine, und mit einer Vorrichtung (101, 301) nach einem der Ansprüche 1 bis 9 zum Befestigen eines Winkelgebers (102) an der Achse des Gegenstands.

## Claims

1. Apparatus (101) for fixing an angle sensor (102) to an object having at least one resilient element (103), at least one locking element (105) and at least one displacement element (104) which is pretensioned by the resilient element (103) and which co-operates with the locking element (105) owing to the pretensioning so that the locking element (105) engages fixedly in a recess (106), wherein the displacement element (104) can be held in the fixing position thereof by the resilient element (103) in contact with the locking element (105), and the locking element (105) can thereby be pressed into the recess.

2. Apparatus according to claim 1, **characterised in that** the displacement element (104) is displaceable in an axial direction (110) and, in particular, **in that** the displacement element (104) is a sleeve which surrounds the apparatus (101) at least partially in an axial direction (110).

3. Apparatus according to claim 1 or claim 2, **characterised in that** the resilient element (103) is a spring, in particular a helical spring.

4. Apparatus according to any one of claims 1 to 3, **characterised in that** the recess (106) is an annular groove.

5. Apparatus according to any one of claims 1 to 4, **characterised in that** the locking element (105) is a ball which is positioned peripherally in a corresponding drilled hole of the apparatus (101) and which can be pressed in a radial direction into the recess (106) in the angle sensor (102) by a restoring force of the resilient element (103) and by means of a flank (107) of the displacement element (104) which forms an acute angle with the axial direction (110) of the angle sensor (102).

6. Apparatus according to any one of claims 1 to 4, **characterised in that** the apparatus (101) has at its periphery at least one secant-shaped notch (312), which is directed towards the axis (108) of the angle sensor (102), so that the direction of the notch (312) encloses an acute angle with the axis (108), and **in that** the locking element is a cylindrical element (305) which is positioned in the secant-shaped notch (312) and which can be pressed into the recess in the angle sensor (102) by means of a restoring force of the resilient element (303) which acts substantially on the ends thereof.

7. Apparatus according to any one of claims 1 to 6, **characterised in that** the angle sensor (102) and the apparatus (101) each have at least one positioning means (610, 611) which is/are preferably arranged on the periphery, which is/are, in particular, axially aligned, which is/are associated with each other and which engage(s) in each other with at least partial positive-locking when the angle sensor (102) is fixed in order to fix the angle sensor (102) in a defined manner in the peripheral direction relative to the apparatus (101).

8. Apparatus according to claim 7, **characterised in that** the positioning means are formed by at least one screw head on the angle sensor (102) and by at least one groove in the apparatus (101) which extend(s) radially relative to the axis (108) of the angle sensor (102).

9. Apparatus according to any one of claims 1 to 8, **characterised in that** several locking elements (105, 305) are arranged with peripheral distribution, in particular **in that** three locking elements (105, 305) are arranged at the positions on the periphery of the apparatus (101, 301) which correspond to the corner points of an equilateral triangle.

10. Article having at least one axis, in particular a processing machine or a manufacturing machine, and having an apparatus (101, 301) according to any one of claims 1 to 9 for fixing an angle sensor (102) to the axis of the object.

## Revendications

1. Dispositif (101) pour fixer un capteur angulaire (102) sur un objet, comportant au moins un élément (103) élastique, au moins un élément de blocage (105) et au moins un élément de déplacement (104) qui est précontraint par l'élément élastique (103) et coopère avec l'élément de blocage (105) par la précontrainte de telle sorte que l'élément de blocage (105) s'engage dans un évidement (106) en opérant une fixation, **caractérisé en ce que** l'élément de déplacement (104) peut être maintenu dans sa position de fixation par l'élément élastique (103) en appui contre l'élément de blocage (105) et **en ce que** l'élément de blocage (105) peut être enfoncé dans l'évidement.

2. Dispositif selon la revendication 1, **caractérisé en ce que** l'élément de déplacement (104) peut être déplacé dans le sens axial (110) et en particulier, **en ce que** l'élément de déplacement (104) est un manchon qui entoure le dispositif (101) dans le sens axial (110) au moins par section.

3. Dispositif selon la revendication 1 ou 2, **caractérisé en ce que** l'élément élastique (103) est un ressort, en particulier un ressort cylindrique.

4. Dispositif selon l'une quelconque des revendications 1 à 3, **caractérisé en ce que** l'évidement (106) est une rainure annulaire.

5. Dispositif selon l'une quelconque des revendications 1 à 4, **caractérisé en ce que** l'élément de blocage (105) est une boule qui est positionnée sur le pourtour dans un alésage correspondant du dispositif (101) et qui, par une force de rappel de l'élément élastique (103) et à l'aide d'un flanc (107) de l'élément de déplacement (104) qui forme un angle aigu avec le sens axial (110) du capteur angulaire (102), peut être enfoncée à l'intérieur de l'évidement (106) dans le capteur angulaire (102) dans le sens radial.

6. Dispositif selon l'une quelconque des revendications 1 à 4, **caractérisé en ce que** le dispositif (101) présente, sur son pourtour, au moins une encoche (312) en forme de sécante orientée vers l'axe (108) du capteur angulaire (102) de telle sorte que la direction de l'encoche (312) forme avec l'axe (108) un angle aigu et **en ce que** l'élément de blocage est un corps cylindrique (305) qui est positionné dans l'encoche (312) et peut être enfoncé à l'intérieur de l'évidement dans le capteur angulaire (102) par une force de rappel de l'élément élastique (303) opérant en substance à ses extrémités.

7. Dispositif selon l'une quelconque des revendications 1 à 6, **caractérisé en ce que** le capteur angulaire (102) et le dispositif (101) présentent chacun au moins un moyen de positionnement (610, 611) disposé de préférence sur le pourtour et orienté en particulier dans le sens axial, les moyens de positionnement étant affectés l'un à l'autre et, lors de la fixation du capteur angulaire (102), s'ajustant de façon serrée au moins partiellement pour fixer de façon définie le capteur angulaire (102) dans le sens périphérique par rapport au dispositif (101).

8. Dispositif selon la revendication 7, **caractérisé en ce que** les moyens de positionnement sont formés par au moins une tête de vis sur le capteur angulaire (102) et par au moins une rainure passant dans le sens radial par rapport à l'axe (108) du capteur angulaire (102) et réalisée dans le dispositif (101).

9. Dispositif selon l'une quelconque des revendications 1 à 8, **caractérisé en ce que** plusieurs éléments de blocage (105, 305) sont répartis sur le pourtour, en particulier **en ce que** trois éléments de blocage (105, 305) sont disposés sur le pourtour du dispositif (101, 301) aux positions correspondant aux sommets d'un triangle équilatéral.

10. Objet comportant au moins un axe, en particulier une machine de traitement ou une machine de production, et un dispositif (101, 301) selon l'une quelconque des revendications 1 à 9 pour fixer un capteur angulaire (102) sur l'axe de l'objet.
